# EUROPEAN PATENT APPLICATION

(11) **EP 4 235 631 A1**
(43) Date of publication of application: **30.08.2023**
(21) Application number: 22158243.0
(22) Date of filing: 23.02.2022
(51) Int. Cl.: G09B 23/30, G09B 23/32

(54) **FIRST RESPONDER TRAINING EQUIPMENT**

(71) Applicant: Virtamed AG, 8952 Schlieren (CH)
(72) Inventor: Henschel, Chris, 8952 Schlieren (CH); Hess, Michel, 8952 Schlieren (CH); Jiroudek, Daniel, 8952 Schlieren (CH); Bachhofen, Daniel, 8952 Schlieren (CH); Mattes-O Brien, Carolyn, 8952 Schlieren (CH); Gluck, Enrich, 8952 Schlieren (CH)
(74) Representative: Wenger, Joel-Théophile

(57) **Abstract**

The present invention is directed to the field of equipment for training people, in particular, first responders acting in a critical situation, such as accident, natural disaster, or war.

The present invention proposes a system to provide a more realistic simulation of a given scenario, as well as a better assessment of the participant's behavior. For that purpose, it is proposed, in the frame of the present description, a first responder training equipment comprising :
- a central processing unit connected with :
- a location determination module,
- a long-range telecommunication module,
- at least one body vital sensor,
- at least one indicator,
- at least one sensor,
- an internal power supply, and wherein the central processing unit comprises a memory storing a program that, while activated, executes a training scenario.

## Description

### Introduction

The present invention is directed to the field of equipment for training people, in particular, first responders acting in a critical situation, such as accident, natural disaster, or war.

### Background Art

The training of first responders is in large part theoretical, going through various crisis scenarios and how to respond in an effective and swift manner. Pictures or videos are used to explain the situation and the appropriate reaction and response. Additional training is carried out in person in a situation designed to replicate reality as close as possible or appropriate. Such trainings are driven by a supervisor generally connected by radio with each participant. The supervisor runs the scenario and passes the instructions by radio to the participants. The assessment of the participants is based on feedback from and interactions with the other participants.

### Brief description of the invention

The present invention proposes a system and method to provide a more realistic simulation of a given scenario, as well as a better assessment of the participant's behavior. For that purpose, it is proposed, in the frame of the present description, a first responder training equipment comprising :
- a central processing unit connected with :
- a location determination module,
- a long-range telecommunication module,
- at least one body vital sensor,
- at least one indicator,
- at least one sensor,
- an internal power supply, and wherein the central processing unit comprises a memory storing a program that, while activated, executes a training scenario.

One key factor of the first responder training equipment is the capacity to run a training scenario without the constant connection with a central management system. The scenario is stored in the equipment and can be triggered by various factors including the time, the location, the feedback of the sensor or a command received via the long-range telecommunication module. From this trigger, the scenario is executed on the equipment in an autonomous manner. The central processing unit receives the information from the sensor(s) and updates the indicator(s) according to the program stored in the memory.

### Brief description of the figures

The present invention will be better understood with the help of the attached, figures, given is a nonlimiting way, namely:
- figure 1 illustrates the training equipment worn by a person to be trained,
- figure 2 illustrates another version of the training equipment with sensors and indicators,
- figure 3 illustrates a fake syringe with communication capability,
- figure 4 illustrates a tourniquet with communication capability,
- figure 5 illustrates one example of a training scenario.

### Detailed description

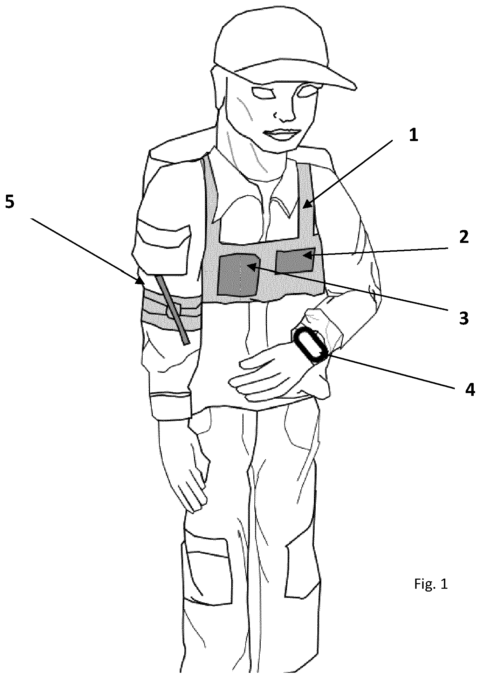

The main object of the present invention is the first responder training equipment 1 for which an example is illustrated by the figure 1. The training equipment 1 could be in the form of a harness, a vest without sleeves, or a jacket with sleeves. It is designed to be worn by the person to train and therefore the size can be adjusted by suitable straps or a belt.

It comprises an internal power supply 2 in the form of a rechargeable battery. The training equipment 1 comprises a central processing unit 3 in charge of executing the training scenario. For that purpose, the central processing unit 3 comprises a memory in which the scenario is stored. It comprises a clock to synchronize the execution of the training scenario and to record a timestamp associated with the information received by the sensors. The central processing unit 3 is connected to the various sensors or indicators present in the training equipment 1. The information provided by the sensors are used to influence the execution of the training scenario

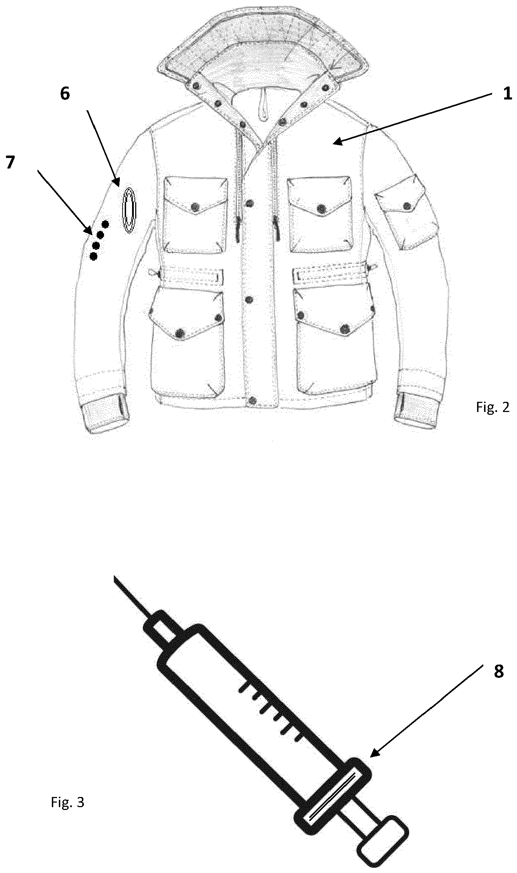

The training equipment comprises at least one a wireless short range communication module as illustrated in the jacket 1 of the figure 2. The short-range communication module is connected to an antenna 6. This antenna 6 is preferably located in a place where an action must be taken. The wireless short range communication module can be connected to several antennas located in different places in the jacket in order to collect the interaction with accessories.

We can have two types of antennas depending on the use of the sensor connected to the antenna. As explained above, the antenna could be set for the detection of a very short-range accessory for example using RFID. It can therefore detect the use of the accessory (for example the tourniquet 5 of the figure 1) at the proper location.

Other short-range communication modules can be used to detect the presence of other training accessories or participants. In one embodiment, the training accessory detected is a stretcher equipped with a Bluetooth transmitter. The training equipment via the short-range communication module (in this example a Bluetooth receiver) can detect the presence of the stretcher. This short-range communication module can be used to detect the presence of other participants (in this example a Bluetooth communication module).

In the figure 1, the training equipment 1 illustrates the person to be trained with a tourniquet 5. The tourniquet 5 is an example of one of the accessories used for the training. The training equipment 1 through the antenna located for example in the upper arm of the jacket can detect the positioning of the tourniquet 5 during the training.

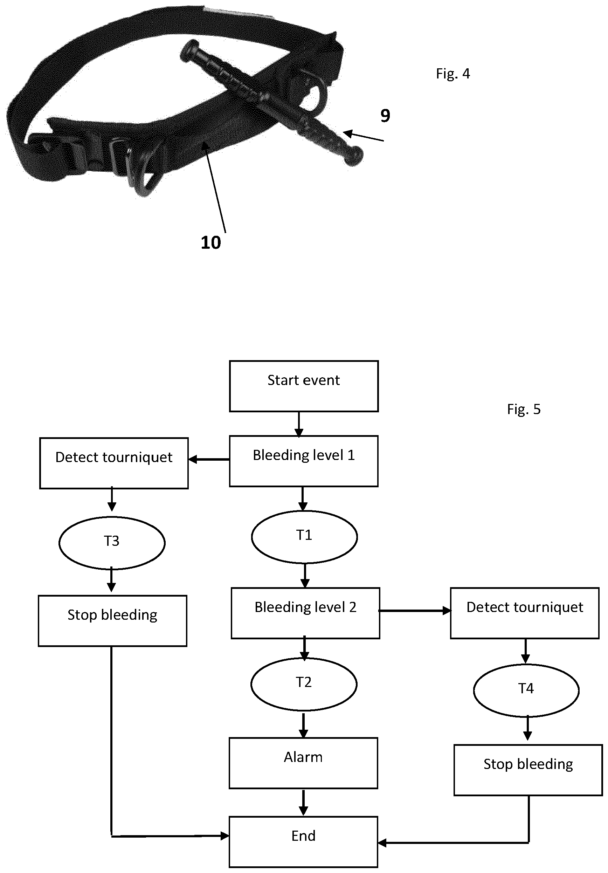

For that purpose, the accessories such as the tourniquet 5 (see figure 1 and 4) or the syringe 8 (see figure 3), comprises an element such as an RFID tag that interact with the antenna while the accessory is placed near the antenna. This interaction is detected by the central processing unit and update the execution of the training scenario. The tourniquet or the syringe are example of modified medical devices comprising a wireless tag such as a RFID.

Figure 2 illustrates one scenario with one indicator 7 in the form of a strip of LED and a sensor in the form of the antenna 6 connected to the short-range wireless communication module. The central processing unit 3 comprises a memory in which a training scenario is stored. A training scenario is a selection of events connected by a link and triggered by a starting event. The link can be a time delay, a signal from a sensor or the reception of a remote signal.

Various sensors can be part of the training equipment. As illustrated in figure 2, one sensor can be a short- range wireless receiver for which the antenna 6 is placed at a location where an interaction is to be detected. Another sensor can be a bio-sensor acquiring the heart pulse rate of the participant and the body temperature, for example in a wristwatch 4. The wristwatch 4 can be also used to display a message.

Other sensors can be part of the jacket namely :
- Biometric or vitals sensors, like temperature, pulse, oxygen, muscle sensors for the participant wearing the jacket.
- Acceleration Sensors to detect force impacts and orientation of the jacket (identifying, for example, if the patient is standing or lying down, and how the patient is transported, e.g., by measuring jerks during transportation).
- Pressure sensors, to detect a pressure on a location where for example a wound was simulated
- Position sensors to determine the position of the jacket in world space. The position sensor not only provides the location of the participant but also the position of the training equipment in the space. In addition, with a GPS unit, other technologies can be used such as Ultra-Wide Band to allow a precise positioning of the participants even in a close area where the GNSS satellites cannot be received.
- Tracking sensors, e.g., to track the position of a syringe coming from outside
- Proximity sensors, acoustic, visual, NFC, etc.
- Photodetectors for detecting light situations (detecting time of day, etc.; utilizing IR, etc.)

According to an embodiment of the present invention, each of these sensors can be separate from the jacket and attached to or on the participant with a strap or hook and loop fastener. This could be the case for the simulation of a wound on a leg of the participant. These remote sensors are connected to the central processing unit with a wire connection or a wireless short-range connection such as Bluetooth.

The training equipment comprises also actuators to transmit information of the participant and the persons surrounding the participant. Example of actuators are :
- Small displays screens or LEDs visualizing an injury
- Haptic feedback such as vibration, electric shocks, or thermal actuators to produce heat or cold
- Speakers and/or earbuds for audio cues
- Fluids with pumps for simulation of blood and/or bodily fluids

In the same manner as the sensors, these actuators can be located separately from the jacket but on the participant at the place where the action is taking place. These remote actuators are connected to the central processing unit with a wire connection or a wireless short-range connection such as Bluetooth.

The central processing unit plays the training scenario stored in the memory. A triggering event starts the execution of the scenario. According to one example, the triggering event is a predetermined time. According to another example, the triggering event is determined from one of the sensors of the training equipment. A light detector can play the role of the triggering event while detecting a flash. This flash can be generated when the user passes a light barrier hidden in the terrain. According to another example, a biometric sensor can be used to trigger the start of the scenario by reaching a threshold. For example, when the heart rate reaches 120 beats per minute, the scenario is started.

According to another embodiment, the triggering event can be the reception of a signal via the long-range communication module. This signal can be sent by a supervisor in the management center deciding when the scenario is started. According to another embodiment, a beacon is placed in the terrain and when the participant comes close to the beacon, the participant receives the start signal via either the short-range communication module or the long-range communication module.

The figure 5 is an example of a training scenario. In this example, when the scenario is started, the first event of the selection of events is the simulation of a bleeding (Bleeding level 1) with the help of the LED strip 7 as illustrated in the figure 2. The LED strip will start to blink, indicating damage to the arm. The speed and intensity of the LED strip is low, indicating a wound with little bleeding. The participant (called the main participant) can also receive an audio message via a loudspeaker indicating the nature of the injury.

The central processing unit monitors the various sensors and sets a first delay T1 to take an action.

During this delay, one possibility is to detect the use of the tourniquet. In the figure 4, the tourniquet 9 comprises an RFID 10 which is detected by the antenna 6 located on the arm of the participant. The training scenario then will wait for another delay T3 during which the tourniquet is supposed to be in place. If the delay T3 is terminated and the tourniquet is still in place, the next step is to "Stop bleeding", illustrated by the LED strip being switched off.

In the case the tourniquet is not detected, after the delay T1, the LED strip indicates a higher level of bleeding by increasing the speed and light of the LED strip (Bleeding level 2).

In the same manner, after the level of bleeding indicates the second level, the central processing unit monitors the wireless communication module connected to the antenna 6 during a delay T2 and if no accessory is detected such as the tourniquet, it sends a signal to the participant to indicate the emergency state, such as losing consciousness.

In the scenario illustrated in the figure 5, after the bleeding level has been increased to the level 2, the central processing unit can detect the tourniquet before the expiration of the delay T3. Consequently, the same scenario as before is executed and after a delay T4 during which the tourniquet is applied at the location indicated by the LED strip, the step "Stop bleeding" is reached.

The use of other sensors can be combined during the scenario. In the previous example, a pressure sensor is placed on the arm of the participant to detect a pressure on the place where the LED strip is placed. In lieu of the tourniquet, the scenario can accept a pressure on the pressure sensor to pass to the next step, i.e., lower the bleeding level.

In parallel with the execution of the training scenario, the central processing unit records the parameters of the sensors with a timestamp. As a consequence, the reaction of the participant is recorded, the position monitored and, in this example, the position sensor will record the position of the participant and behavior. The central processing unit will record the movement of the participant, in particular, the reaction to the message informing the participant of the injury.

The participant can also have a radio device that is connected and monitored by the central processing unit. The central processing unit records the communication from the participant to other participant(s) or to an emergency unit, this recording is timestamped.

The training equipment monitors the various sensors, in particular, the short-range wireless sensors. One sensor (for example a Bluetooth sensor) can detect another participant in the vicinity of the main participant. This detection is recorded with a time-stamp. In an exemplary training scenario, the detection of another participant will trigger an increase of the bleeding for example. The LED strip 7 increases in intensity and speed to indicate this particular condition.

The short range wireless sensor then detects the tourniquet used by another participant (or the main participant), the tourniquet having an RFID tag 10 and therefore interacting with the antenna 6. The use of the tourniquet 5 is recorded by the central processing unit and time-stamped. It also triggers the end of the bleeding as displayed by the LED strip 7 in accordance with the steps defined in the training scenario.

Other training scenarios can be proposed involving only the main participant. According to an example, the triggering event is a gas detector which is part of the training equipment. The wristwatch displays the presence of the gas. This is the beginning of the scenario, and the central processing unit records the reaction of the participant. For this purpose, a gas mask, which includes a transmitter (for example an RFID tag) that interacts with an antenna placed close to the top of the jacket. The central processing unit records the delay between the triggering of the scenario until the placement of the gas mask.

One important aspect of the present invention is the debriefing. The data recorded by the central processing unit of each participant are uploaded into a database for analysis. For example, this data can be presented in the form of a feedback report with or without scoring.

According to one aspect of the invention, an animation in the form of a video feed is prepared. Each participant receives an avatar and can be identified by a color or a name tag.

The data collected by the central processing unit of the main participant are used to simulate the behavior of the avatar. The avatars of each participant are placed on a map using the location information of each participant. When the scenario is started, the movements of the participants are translated into the movement of the avatars in the animation. The reaction times, for example, of the other participants after the main participant has called for help can therefore be analyzed.

The audio signal of each participant can be played in real-time fashion, so the information passed to the other participants as well as potential calls to an emergency center is analyzed. When the recorded data of the main participant contains the interaction of an accessory (tourniquet, syringe, gas mask, etc.), a pre-recorded standard scene is pulled from a scene database and played at the time corresponding to the timestamp. This scene will show two avatars using the tourniquet for example.

The position of each participant is recorded during the training exercise and played in pseudo real-time thanks to the timestamp.

The presence of a stretcher, comprising a location device, can be also uploaded into the database and played with an animation at the time and location where the real stretcher was used.

This pseudo real-time animation can be used to train the first responder in a critical situation.

According to another embodiment, the time base of the training scenario is modified to accommodate the need of the training. In reference to the example of the figure 5, the delays T1 to T4 are initially determined taking into account the environmental and physiological factors. Before the scenario is started, a variable time coefficient can be applied to all delays (for example 30% faster) to consider other constraints such as the time allocated to the training.

According to another embodiment, the delays (either the initial delays T1 to T4 defined by the environmental and physiological factors or the modified delays taking into account the variable time coefficient) can be modified during the scenario. The training equipment can receive a remote comment to accelerate, decelerate or pause the scenario. For example, a trainer can intervene during the scenario and send a "pause" command to transmit additional information to the participants allowing for an easier training scenario or the possibility of debriefing within the scenario. This command can be sent through the short-range telecommunication module or the long range telecommunication module, via the management center. A command can also reset the scenario and start from the beginning.

## Claims

1. First responder training equipment (1) comprising :
- a central processing unit (3) connected with :
- a location determination module,
- a long-range telecommunication module,
- at least one body vital sensor,
- at least one indicator (7),
- at least one sensor (6),
- an internal power supply (2), and wherein the central processing unit (3) comprises a memory storing a program that, while activated, executes a training scenario.

2. The first responder training equipment of claim 1, wherein the training scenario is based on information provided from the location determination module, the at least one body vitals sensor, the at least one sensor and send information to the at least one indicator.

3. The first responder training equipment of claim 1 or 2, wherein it further comprises a position sensor connected to the central processing unit (3).

4. The first responder training equipment of any of the claims 1 to 3, wherein it further comprises a short range wireless communication module in charge of detecting a short range transmitter, said wireless communication module transmitting information to the central processing in order to update the execution of the training scenario.

5. The first responder training equipment of any of the claims 1 to 4, wherein it further comprises a short range telecommunication module, in charge of detecting at least one other first responder training equipment in the vicinity, said short range telecommunication module transmitting information to the central processing in order to update the execution of the training scenario.

6. The first responder training equipment of any of the claims 1 to 5, wherein it further comprises a haptic feedback controlled by the central processing unit (3) in accordance with the training scenario.

7. The first responder training equipment of any of the claims 1 to 6, wherein the at least one indicator is a visual indicator (4, 7) controlled by the central processing unit (3) in accordance with the training scenario.

8. The first responder training equipment of claim 7, wherein the visual indicator is a visual display system (4) controlled by the central processing unit (3) in accordance with the training scenario.

9. The first responder training equipment of any of the claims 1 to 7, wherein the at least one indicator is a sound generator controlled by the central processing unit (3) in accordance with the training scenario.

10. The first responder training equipment of any of the claims 1 to 9, wherein the at least one body vital sensor is selected among temperature, pulse, oxygen, or muscle sensors.

11. The first responder training equipment of any of the claims 1 to 9, wherein it further comprises a training accessory in the form of a modified medical device that transmits information to update the execution of the training scenario.

12. The first responder training equipment of any of the claims 2 to 11, wherein the long-range telecommunication module transmits information to update the execution of the training scenario.

13. The first responder training equipment of any of the claims 2 to 11, wherein the long-range telecommunication module receives information to update the execution of the training scenario.

14. The first responder training equipment of any of the claims 1 to 13, wherein it further comprises a wrist-attached module connected with the central processing unit.

15. The first responder training equipment of any of the claims 4 to 14, wherein the update of the execution of the training scenario comprises accelerating or decelerating the timebase for the execution of the training scenario.
